# EUROPEAN PATENT APPLICATION

(11) **EP 4 644 848 A1**
(43) Date of publication of application: **05.11.2025**
(21) Application number: 23912591.7
(22) Date of filing: 22.11.2023
(51) Int. Cl.: G01H 1/16, G01H 15/00, G01P 15/00, G06Q 50/10

(54) **METHOD FOR TRACKING AND PROCESSING NOISE IN STRUCTURE**

(30) Priority: 27.12.2022 KR 20220185947
(71) Applicant: SM Instruments Co., Ltd., Daejeon 34109 (KR)
(72) Inventor: KIM, Youngkey, Daejeon 34109 (KR); KANG, Jungoo, Daejeon 34109 (KR)
(74) Representative: Ter Meer Steinmeister & Partner
(86) International application number: PCT/KR2023/018873
(87) International publication number: WO 2024/143915

(57) **Abstract**

The present invention relates to a noise tracking and processing method using a plurality of vibration sensing units, the method comprising: a vibration sensing step for sensing the vibration of a structure; a data acquisition step for acquiring data about the intensity of the vibration, by receiving an input of the sensed vibration as a signal about the intensity of the vibration; a triggering step for triggering an instance in which the signal level of the acquired data about the intensity of the vibration exceeds a certain threshold; and an arrival order and maximum amplitude calculation step for calculating an arrival order by making the trigger time be an arrival time, and for calculating the maximum amplitude of the signal level of the data about the intensity of the vibration.

## Description

The present invention relates to an apparatus for tracking a noise, which analyzes a location of a noise or a noise source generated in a structure.

The present invention also relates to a method for tracking and processing a noise, which tracks a location of a noise generated in a vehicle.

### Background Art

A structure, such as a vehicle, includes numerous parts and generates various noises or unusual sounds.

The noises or unusual sounds are generated in a variety of ways, such as noises accompanied by resonance at a specific frequency generated from each part and noises generated at a connected portion with the other part.

Likewise, the noises or unusual sounds generated in vehicles are collectively called a buzz, squeak, rattle (BSR) noise.

The BSR noise is an important factor in determining the quality satisfaction of structures, such as vehicles.

Recently, the BSR noise accounts for a largest proportion of customer complaints regarding automotive noise, vibration, and harshness (NVH).

This BSR noise is divided into buzz generated by own vibrations of panels of parts, squeak generated by friction between parts, and rattle generated by collision between parts.

Whether the BSR noise is generated, a size of the noise, and a location of a noise source vary depending on road surface conditions, driving conditions, characteristics of a vehicle body structure and interior parts, and the vehicle and vehicle age.

To solve the BSR noise problem, a so-called 'find and fix' method, which relies on the subjective evaluation of relevant experts, is conventionally used.

However, this method has difficulties in quantitative and objective BSR evaluation.

Also, when a consumer later complains about the BSR noise, whether or not to repair the part is determined based on a subjective evaluation of a garage engineer, adding to friction between automobile manufacturers and consumers.

### Disclosure

### Technical Problem

The present invention provides method for tracking and processing a noise, which tracks a location of a noise generated in a structure.

The present invention also provides a method for tracking and processing a noise, which tracks a location of a noise generated in a vehicle.

### Technical Solution

An embodiment of the present invention provides a method for tracking and processing a noise using a plurality of vibration sensing units, the method including: a vibration sensing step for sensing a vibration of a structure; a data acquisition step for acquiring data about an intensity of the vibration, by receiving an input of the sensed vibration as a signal about the intensity of the vibration; a triggering step for triggering an instance in which a signal level of the acquired data about the intensity of the vibration exceeds a certain threshold; and an arrival order and maximum amplitude calculation step for calculating an arrival order by making the trigger time as an arrival time, and for calculating a maximum amplitude of the signal level of the data about the intensity of the vibration.

In an embodiment of the present invention, a method for tracking and processing a noise based on data indicating a position of a noise source generated by sensing a vibration of a structure, receiving the sensed vibration as a signal about an intensity of the vibration, acquiring data about the intensity of the vibration includes: a triggering step for triggering an instance in which a signal level of the acquired data about the intensity of the vibration exceeds a certain threshold; and an arrival order and maximum amplitude calculation step for calculating an arrival order by making the trigger time as an arrival time, and for calculating a maximum amplitude of the signal level of the data about the intensity of the vibration.

In an embodiment, the signal about the intensity of the vibration may be output in a form of a vibration level signal, and the vibration level signal may represent an acceleration of the vibration.

In an embodiment, the method may further include a recognition step for a user to recognize a point adjacent to a position at which the noise source occurs through the arrival order.

In an embodiment of the present invention, a method for tracking and processing a noise based on data indicating a position of a noise source generated by sensing a vibration of a structure, receiving the sensed vibration as a signal about an intensity of the vibration, acquiring data about the intensity of the vibration includes: a triggering step for triggering an instance in which a signal level of the acquired data about the intensity of the vibration exceeds a certain threshold.

In an embodiment, the signal about the intensity of the vibration may be output in a form of a vibration level signal, and the vibration level signal may represent an acceleration of the vibration.

In an embodiment, the method may further include an arrival order and maximum amplitude calculation step for calculating an arrival order by making the trigger time as an arrival time, and for calculating a maximum amplitude of the signal level of the data about the intensity of the vibration; and a recognition step for a user to recognize a point adj acent to the position of the noise source through the arrival order.

In an embodiment of the present invention, an apparatus for tracking and processing a noise using a plurality of vibration sensing units includes: a plurality of vibration sensing units configured to sense a vibration of a structure; a data acquisition unit configured to receive a signal about an intensity of the vibration output from the plurality of vibration sensing units and acquire data about the intensity of the vibration; a data calculation unit configured to receive data about the intensity of the vibration output from the data acquisition unit and calculate data indicating a location of a noise source; and a display unit configured to display the data indicating the location of the noise source.

In an embodiment, the signal about the intensity of the vibration may be output in a form of a vibration level signal, and the vibration level signal may represent an acceleration of the vibration.

In an embodiment, the data calculation unit may trigger a signal level that passes a positive threshold and a negative threshold among the vibration level signals and determine that a specific triggered time and a specific signal level are valid data.

In an embodiment, the data calculation unit may set a first window and a second window, which are specific time sections of the vibration level signal, to trigger a signal level passing a positive threshold through a ratio of RMS values of the first window and the second window, thereby determining the specific triggered time and the specific signal level as the valid data.

In an embodiment, the data calculation unit may convert a waveform of the signal level of a medium to be compared into data and stores the data therein and determine a point at which one of the plurality of channels showing a waveform of a signal level similar to the waveform of the signal level of the medium to be compared is located as a point adjacent to the noise source.

In an embodiment of the present invention, an apparatus for tracking and processing a noise using a plurality of vibration sensing units includes: a data acquisition unit configured to receive a signal about an intensity of a vibration output from a plurality of vibration sensing units that sense a vibration of a structure and acquire data about the intensity of the vibration; a data calculation unit configured to receive data about the intensity of the vibration output from the data acquisition unit and calculate data indicating a location of a noise source; and a display unit configured to display data indicating the location of the noise source.

In an embodiment, the signal about the intensity of the vibration may be output in a form of a vibration level signal, and the vibration level signal may represent an acceleration of the vibration.

In an embodiment, the data calculation unit triggers a signal level that passes a positive threshold and a negative threshold among the vibration level signals to determine a specific triggered time and a specific signal level as valid data.

In an embodiment, the data calculation unit may set a first window and a second window, which are specific time sections of the vibration level signal, to trigger a signal level passing a positive threshold through a ratio of RMS values of the first window and the second window, thereby determining the specific triggered time and the specific signal level as valid data.

In an embodiment of the present invention, an apparatus for tracking and processing a noise using a plurality of vibration sensing units includes: a data acquisition unit configured to receive a signal about an intensity of a vibration output from a plurality of vibration sensing units that sense a vibration of a structure and acquire data about the intensity of the vibration.

In an embodiment, the signal about the intensity of the vibration may be output in a form of a vibration level signal, and the vibration level signal may represent an acceleration of the vibration.

In an embodiment, the apparatus may further include a data calculation unit configured to receive data about the intensity of the vibration output from the data acquisition unit and calculate data indicating a location of a noise source, wherein the data calculation unit triggers a signal level that passes a positive threshold and a negative threshold among the vibration level signals to determine a specific triggered time and a specific signal level as valid data..

In an embodiment, the apparatus may further include a data calculation unit configured to receive data about the intensity of the vibration output from the data acquisition unit and calculate data indicating a location of a noise source, wherein the data calculation unit sets a first window and a second window, which are specific time sections of the vibration level signal, to trigger a signal level passing a positive threshold through a ratio of RMS values of the first window and the second window, thereby determining the specific triggered time and the specific signal level as valid data.

### Advantageous Effects

According to the present invention, the location of the noise source in the structure may be tracked.

According to the present invention, the arrival order of each channel displayed on the screen may be known.

According to the present invention, even people who are not experts in the field of vibration and noise may easily recognize the data and track the location of the noise sources.

### Description of Drawings

FIG. 1 is a view for explaining an operation of an apparatus for tracking and processing a noise using a plurality of vibration sensing units according to an embodiment of the present invention.
FIG. 2a is a block diagram showing an overall configuration of the apparatus for tracking and processing a noise according to an embodiment of the present invention.
FIG. 2b is a perspective view of the apparatus for tracking and processing a noise according to an embodiment of the present invention.
FIG. 2c is a front view of the apparatus for tracking and processing a noise according to an embodiment of the present invention.
FIG. 2d is a rear view of the apparatus for tracking and processing a noise according to an embodiment of the present invention.
FIG. 3a is a schematic diagram of a display screen for explaining an operation of the apparatus for tracking and processing a noise according to an embodiment of the present invention.
FIG. 3b is a view showing a display screen for tracking a noise displayed on the apparatus for tracking and processing a noise according to an embodiment of the present invention.
FIG. 4 is a view for explaining a simple trigger specification method used for analysis by triggering of the apparatus for tracking and processing a noise according to an embodiment of the present invention.
FIG. 5 is a view for explaining a picking window measurement method, which is a trigger analysis method of the apparatus for tracking and processing a noise according to an embodiment of the present invention.
FIG. 6 is a view for explaining a cross correlation measurement method, which is a trigger analysis method of the apparatus for tracking and processing a noise according to an embodiment of the present invention.
FIG. 7 is a flowchart of a method for tracking and processing a noise according to an embodiment of the present invention.
FIG. 8 is a view showing a screen configuration for post-processing analysis of a noise tracking according to an embodiment of the present invention.

### Mode for Invention

Hereinafter, an apparatus and a method for tracking and processing a noise according to the present invention will be described in detail with reference to the attached views.

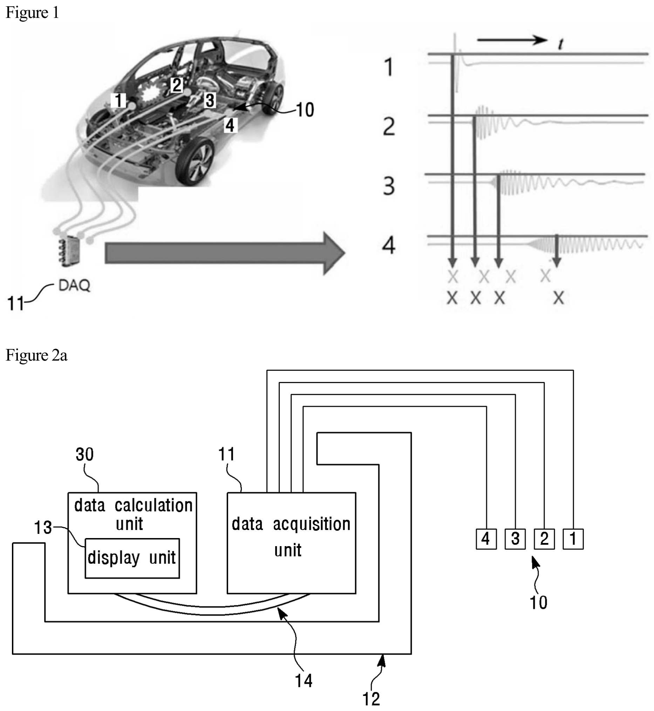

FIG. 1 is a view for explaining an operation of an apparatus for tracking and processing a noise using a plurality of vibration sensing units according to an embodiment of the present invention.

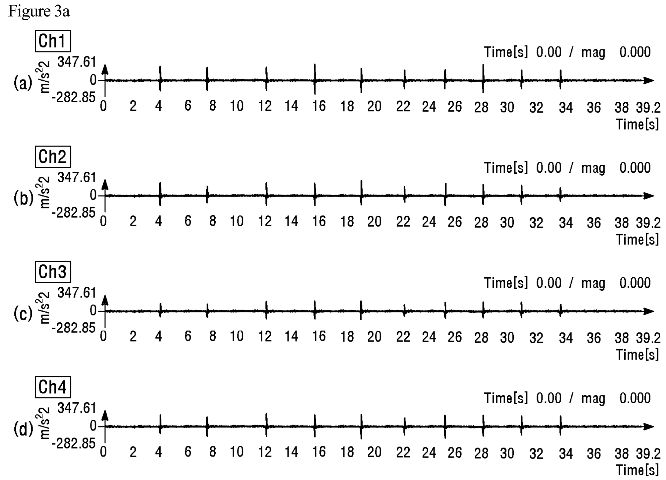

FIG. 3a is a schematic diagram of a display screen for explaining the operation of the apparatus for tracking and processing a noise according to an embodiment of the present invention.

With reference to FIGS. 1 and 3a, an overall operation of the apparatus for tracking and processing a noise using a plurality of vibration sensing units 10 according to an embodiment of the present invention will be described.

Each vibration sensing unit 10 is installed at a point at which a vibration event may occur in a structure.

The number of vibration sensing units 10 may be plural, such as 4 or 8.

When there are four or eight vibration sensing units 10, calculation in a data calculation unit 30 may be easy.

The vibration sensing unit 10 may be an accelerometer 10 that measures an acceleration of a vibration.

For example, as shown in FIG. 1, four accelerometers 10 are installed in four different parts of a structure, for example, a vehicle.

Each vibration sensing unit 10 may sense a vibration at an installed point of the structure.

The vibration sensing unit 10 senses an intensity of the vibration in the installed area.

The intensity of vibration may refer to a quantitative size of the vibration.

The vibration sensing unit 10 senses a vibration and outputs a signal about the intensity of the vibration.

According to one embodiment of the present invention, a signal about the intensity of the vibration is output in a form of a vibration level signal.

For example, when the vibration sensing unit 10 is an accelerometer 10, the vibration sensing unit 10 senses the intensity of the vibration through an acceleration of the vibration at an attached portion.

The vibration sensing unit 10 outputs a vibration level signal indicating the acceleration of the vibration as a signal related to the intensity of the sensed vibration.

According to one embodiment of the present invention, the vibration sensing unit 10 may output an analog signal proportional to the intensity of the vibration as a signal related to the intensity of the vibration.

The vibration level signal may be an analog signal proportional to the acceleration of the vibration.

The data acquisition unit 11 receives signals related to the intensity of the vibration output by the vibration sensing unit 10 for each channel and acquires data about the intensity of the vibration.

When the signal about the intensity of vibration output by the vibration sensing unit 10 is an analog signal, the data acquisition unit 11 may receive the analog signal for each channel, convert it into digital data, and acquire data about the intensity of the vibration.

The data acquisition unit 11 outputs data about the acquired intensity of the vibration.

The data acquisition unit 11 may output data about the intensity of the vibration in a form of a digital signal.

The data acquisition unit 11 may convert data about the intensity of the vibration into a serial communication form and output the data in a form of a converted serial communication signal.

In this case, the data about the intensity of the vibration may be output through a serial communication signal bus (USB) cable 14 in the form of the serial communication signal.

The calculation program 31 of the data calculation unit 30 receives data about the intensity of vibration output from the data acquisition unit 11 in a form of a digital signal.

According to one embodiment of the present invention, when the data acquisition unit 11 acquires signals related to the intensity of vibration generated at different locations of the structure sensed by the vibration sensing unit 10 for each channel, the calculation program 31 of the data calculation unit 30 may receive data about the intensity of vibration output from the data acquisition unit 11 in the form of a digital signal and calculate the data about the location of the noise source to track the location of the noise source.

According to one embodiment of the present invention, among the plurality of vibration sensing units 10, the vibration sensing unit 10 attached closer to the vibration generation point transmits a vibration level signal indicating that the intensity of the vibration is greater to the data acquisition unit 11.

For example, the vibration level signal may have a larger amplitude as the intensity of the vibration increases.

If the vibration sensing unit 10 is an accelerometer 10, the vibration sensing unit 10 may determine that the greater the acceleration of vibration, the greater the intensity of vibration, and output a vibration level signal with a large amplitude.

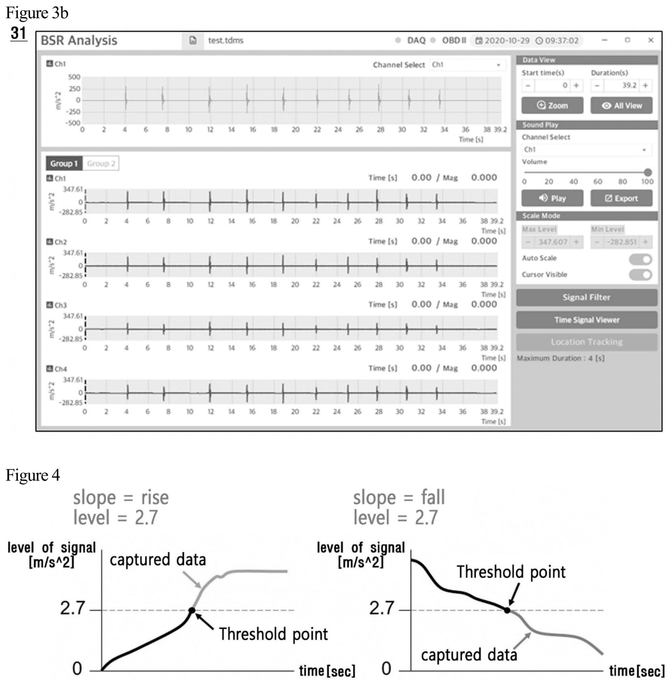

For example, as shown in FIG. 3b, among the plurality of channels detected by the plurality of vibration sensing units 10, the amplitude of the vibration level signal acquired from a first channel Ch1 is the largest.

Accordingly, on a display screen shown in FIG. 3b, only the first channel ch1 is selected and the first channel ch1 is separately displayed in the upper area.

After tracking the location of the noise source using a plurality of vibration sensing units 10, the plurality of vibration sensing units 10 are moved to a periphery of the point at which the vibration level signal appears the largest among each channel.

For example, as shown in FIG. 3b, the plurality of vibration sensing units 10 are moved to the periphery of a point related to the first channel Ch1 in which the amplitude of the vibration level signal is the largest.

After moving the plurality of vibration sensing units 10, again, the DAQ 11 acquires data about the intensity of the vibration for each channel based on signals about the intensity of the vibration generated at different positions of the structure.

When this method is continuously implemented, a specific point of the noise source may be identified.

The data calculation unit 30 calculates data indicating the location of the noise source through the calculation program 31, based on the data about the intensity of the vibration output in the form of a digital signal output by the data acquisition unit 11.

The data indicating the location of the noise source may be calculated using a triggering technique or an accumulated display technique.

The data calculation unit 30 triggers a specific time corresponding to when an amplitude of vibration exceeds a preset threshold or falls below the threshold.

When a trigger occurs, the calculation program 31 assigns an arrival order and a maximum amplitude value for each trigger.

The calculation program 31 cumulatively counts the number of trigger occurrences and first rank in arrival order for each channel.

The data calculation unit 30 displays, on the display unit 13, the vibration level signal of the channel with a maximum accumulated first rank in arrival order.

The data indicating the location of the noise source may include a vibration level signal of the channel with the maximum accumulated first rank in arrival order.

Through the display unit 13, the user may recognize that a noise occurs in the closest location to a point at which the vibration sensing unit 10 is located, which corresponds to the channel with the maximum accumulated first rank in arrival order.

The data calculation unit 30 may display, on the display unit 13, the vibration level signal of the channel with the maximum accumulated first rank in arrival order obtained from the data calculation unit 30 with the data about the intensity of vibration acquired from the data acquisition unit 11.

As shown in FIG. 3a, the display unit 13 displays the vibration level signal of the channel with the maximum accumulated first rank in arrival order calculated by the data calculation unit 30 along with data on the intensity of vibration acquired from the data acquisition unit 11 is displayed for each channel based on signals related to the intensity of vibration detected by the plurality of vibration sensing units 10.

FIG. 3b is a view showing the intensity of the vibration displayed on a display unit 130 of the data calculation unit 30 and the vibration level signal of the channel having the maximum accumulated first rank in arrival order according to an embodiment of the present invention.

Apparatus for tracking and processing a noise according to the present invention

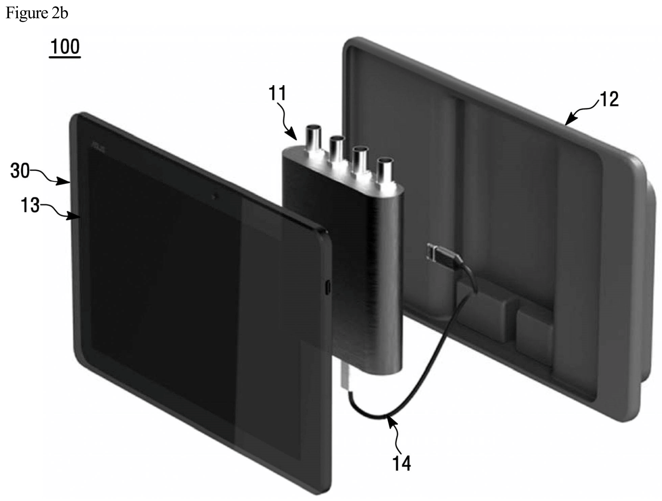

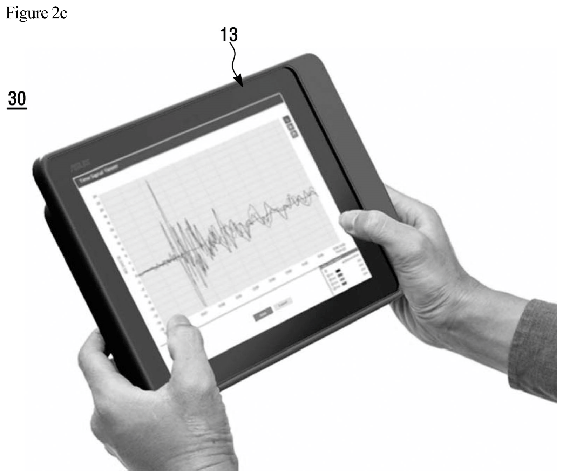

FIGS. 2a and 2b are a block diagram and a perspective view of the apparatus for tracking and processing a noise according to an embodiment of the present invention.

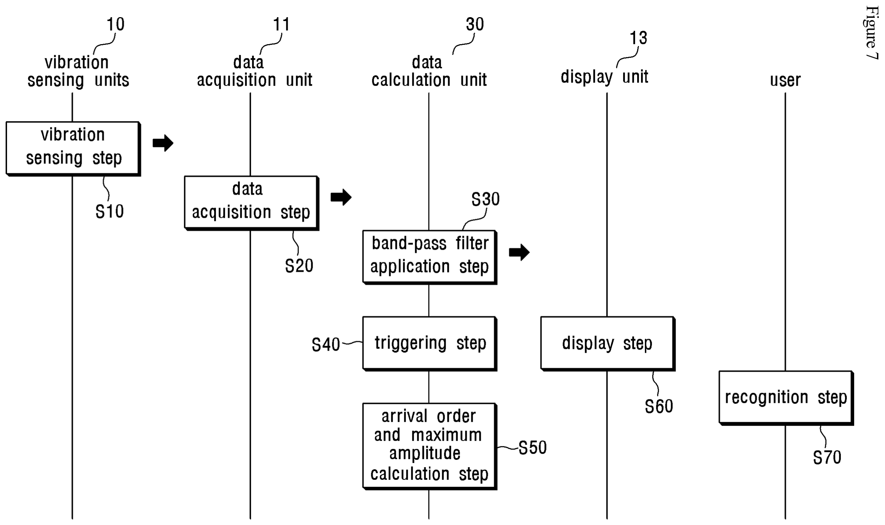

FIG. 7 is a flowchart of a multi-channel noise tracking and processing method according to an embodiment of the present invention.

An apparatus 100 for tracking and processing a noise (hereinafter, referred to as a noise tracking and processing apparatus 100) according to the present invention includes a data calculation unit 30; a data acquisition unit (DAQ) 11; and a case 12.

### Data calculation unit

The data calculation unit 30 is connected to the data acquisition unit 11 through a cable 14.

The cable 14 is specifically a cable capable of performing USB communication.

Also, the cable 14 may use a LAN port or wireless.

As illustrated in FIG. 2b, the data calculation unit 30 may be a laptop or tablet PC.

As illustrated in FIG. 2a, the data calculation unit 30 may include a display unit 13.

As illustrated in FIG. 2b, when the data calculation unit 30 is a laptop or tablet PC, the display unit 13 may be a display screen of the laptop or tablet PC.

According to one embodiment of the present invention, the data calculation unit 30 calculates data indicating the location of the noise source through the calculation program 31 using a triggering technique and a cumulative display technique based on the data about the intensity of vibration transmitted from the data acquisition unit 11.

Through the display unit 13 of the data calculation unit 30, the user may recognize the point of the vibration sensing unit 10 of the channel with the maximum accumulated number of first rank in arrival order as a point adjacent to the noise source.

The arrival order may refer to an order in which signals related to the intensity of vibration detected in each channel arrive at the data acquisition unit 11.

According to one embodiment of the present invention, the data calculation unit 30 may use the software of the data calculation unit 30 to cumulatively count the number of trigger occurrences for each channel and accumulate the number of trigger occurrences and arrival order of triggers for each channel.

The data calculation unit 30 may calculate the number of occurrences of the trigger and the cumulative total of the trigger's arrival order and display the vibration level signal of the channel with the maximum accumulated first rank in the arrival order on the display unit 13.

As illustrated in FIG. 2a, the data calculation unit 30 connected to the DAQ 11 through the cable 14 may calculate data indicating the location of the noise source using a triggering technique and a cumulative display technique.

As illustrated in FIG. 7, the calculation program 31 may calculate data indicating the location of the noise source through a triggering technique and a cumulative display technique based on data acquired through the data acquisition unit 11.

As illustrated in FIGS. 1 and 2a, the data acquisition unit 11 is connected to the plurality of vibration sensing units 10 installed in a place in which a vibration event occurs, such as a vehicle body, and acquires data about the intensity of vibration.

The data acquisition unit 11 receives signals related to the intensity of vibration output by the vibration sensing unit 10 for each channel and acquires data about the intensity of vibration.

When the signal about the intensity of vibration output by the vibration sensing unit 10 is an analog signal, the data acquisition unit 11 may receive the analog signal for each channel, convert the received analog signal into a digital data, and acquire data about the intensity of vibration.

The data acquisition unit 11 outputs data about the acquired intensity of vibration.

The data acquisition unit 11 may output data about the intensity of vibration in the form of a digital signal.

The data acquisition unit 11 may convert data about the intensity of vibration into serial communication form and output the data in the form of a converted serial communication signal.

In this case, data about the intensity of vibration may be output through the serial communication signal bus (USB) cable 14 in the form of a serial communication signal.

The data calculation unit 30 receives the digital signal output from the data acquisition unit 11.

### Case

As illustrated in FIGS. 2a to 2c, the case 12 supports the data calculation unit 30 and the data acquisition unit 11.

As illustrated in FIGS. 2a to 2c, the case 12 may hold the data acquisition unit 11 between the data calculation unit 30 and the data acquisition unit 11.

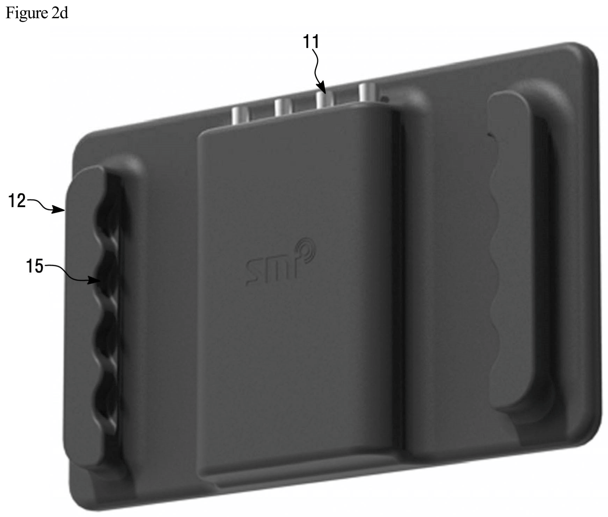

Also, as illustrated in FIG. 2d, the case 12 may be provided with a gripping part 15 so that the user may easily grip the case.

The gripping part 15 may be made of a rubber material with friction to prevent a user's hand from slipping when the user carries the case 12.

### Operation of noise tracking and processing apparatus

### Method for acquiring data indicating location of noise source

FIG. 1 is a view for explaining an operation of the noise tracking and processing apparatus using a plurality of vibration sensing units according to an embodiment of the present invention.

FIG. 7 is a flowchart of a method for tracking and processing a noise according to an embodiment of the present invention.

According to one embodiment of the present invention, the BSR analysis is used as a method for acquiring data indicating the location of the noise source.

The BSR analysis is a software analysis method that uses a vibration sensor to find the location of a noise or a noise source of a vehicle.

A basic principle of the BSR analysis tracking method involves the use of time delay.

As illustrated in FIG. 7, the method for tracking and processing a noise using a plurality of vibration sensing units according to the present invention includes a vibration sensing step S10; a data acquisition step S20; a band-pass filter application step S30; a triggering step S40; an arrival order and maximum amplitude calculation step S50; and a display step S60.

As illustrated, the vibration sensing step S10 is performed by the vibration sensing unit 10.

In the vibration sensing step S10, the vibration of the structure is sensed by using a plurality of vibration sensing units 10 located at different points.

The sensing of the vibration of the structure may include tracking a noise of a complex-shaped vehicle body or a vehicle, as illustrated in FIG. 1.

The data acquisition step S20 is performed by the data acquisition unit 11.

In the data acquisition step S20, the data acquisition unit 11 receives signals related to the intensity of vibration output by the vibration sensing unit 10 for each channel and acquires data about the intensity of vibration.

When the signal about the intensity of vibration output by the vibration sensing unit 10 is an analog signal, the data acquisition unit 11 may receive the analog signal for each channel, convert the data into digital data, and acquire data about the intensity of vibration.

FIG. 3a is a schematic diagram of a display screen for explaining the operation of the noise tracking and processing apparatus according to an embodiment of the present invention.

FIG. 3b is a view showing a display screen for tracking a noise displayed on the noise tracking and processing apparatus according to an embodiment of the present invention.

As illustrated in FIG. 7, the band-pass filter application step S30, the triggering step S40, and the signal arrival order and maximum amplitude calculation step S50 are performed by the data calculation unit 30.

In the triggering step S40, the calculation program 31 built into the data calculation unit 30 triggers the corresponding time when the amplitude of the vibration exceeds a threshold in a signal indicating the intensity of vibration sensed by the vibration sensing unit 10 for each channel.

Also, the calculation program 31 may trigger even when the amplitude of vibration in the signal indicating the intensity of vibration is lower than the threshold.

According to one embodiment of the present invention, the calculation program 31 is a program that tracks unusual sound using BSR analysis and is built into the data calculation unit 30.

As illustrated in FIG. 3, the calculation program 31 includes software that tracks the position using the plurality of vibration sensing units 10.

The calculation program 31 displays, on the display unit 13, the vibration level signal of the channel with the maximum accumulated first rank in the arrival order. Then, the data calculation unit 30 calculates data indicating the location of the noise source through the calculation program 31 using a triggering technique and a cumulative display technique.

The user may look at the display unit 13 and recognize the channel with the highest cumulative total of first rank in arrival order.

Specifically, by looking at the display unit 13, the user may recognize that the point of the channel with the maximum accumulated number of first ranks in arrival order is a point closest to the noise source generation point.

In the signal arrival order and maximum amplitude calculation step S50, the data calculation unit 30 assigns an arrival order to each channel using the timing of triggering as the arrival time, and stores the maximum amplitude of each channel.

The band-pass filter application step S30 may be provided between the data acquisition step S20 and the signal arrival order and maximum amplitude calculation step S50.

The band-pass filter application step S30 is performed in the calculation program 31 and includes removing vibration components in a specific frequency region using a band-pass filter.

When using the band pass filter, only alternating current of a given frequency may be passed through and all alternating current of other frequencies may be attenuated.

As illustrated in FIG. 7, the display step S60 is performed by the display unit 13.

In the display step S60, the calculation program 31 displays the vibration level signal of the channel with the maximum accumulated first rank in arrival order on the display unit 13.

The vibration level signal of the channel with the maximum accumulated first rank in arrival order may be displayed as one channel among multiple channels, as shown at the top of FIG. 3b.

As illustrated in FIG. 7, the recognition step S70 is performed by the user.

The recognition step S70 includes a feature in which the user looks at the screen of the display unit 13 and recognizes the point at which the channel with the maximum accumulated first rank in arrival order is located as a point adjacent to the occurrence of the noise source.

In the triggering step S40, the calculation program 31 triggers a specific time corresponding to when the acceleration signal level exceeds a preset positive threshold or when the acceleration signal level falls below the negative threshold.

Hereinafter, three trigger measurement methods will be described, and the present invention may adopt any one of the following trigger measurement methods.

The signal level of data about the intensity of vibration includes the signal level of acceleration.

### Simple trigger measurement method

FIG. 4 is a view for explaining a simple trigger specification method used for analysis by triggering of the noise tracking and processing apparatus according to an embodiment of the present invention.

In the graph of FIG. 4, the X-axis represents time, and the Y-axis represents the signal level of acceleration.

The time unit of the X-axis may be seconds, and the unit of the acceleration signal level of the Y-axis may be m/s2.

The signal level of data about the intensity of vibration includes the signal level of acceleration.

As illustrated in FIG. 4, when a vibration event occurs, the signal level of acceleration rises (rising slope).

When the acceleration signal level passes the threshold, the calculation program 31 determines that the signal level is valid data.

FIG. 4 is a view showing an exemplary case in which the threshold is 2.7 m/s2.

Conversely, even when the signal level of acceleration falls (falling slope), when the signal level falls below a certain threshold, the calculation program 31 may determine that the acceleration signal level is valid data.

Data is captured even when the acceleration signal level remained above the threshold falls below the threshold.

In this case, the captured data means that the signal level of the acceleration is not valid data.

Specifically, since the signal level of acceleration represents the waveform of an alternating current signal, the threshold value is divided into a positive threshold value and a negative threshold value.

When the acceleration signal level passes the positive threshold and the negative threshold, the calculation program 31 may determine that each corresponding acceleration signal level is valid data.

Specifically, the calculation program 31 may determine that a specific triggered time and a specific signal level are valid data.

Valid data may be used by the calculation program 31 to calculate data indicating the location of the noise source.

In this way, a measurement method that determines that data is valid when the data simply passes a threshold value, which is a specific threshold point, is called a simple trigger measurement method. The simple trigger measurement method has an advantage of being universally usable.

Meanwhile, the simple trigger measurement method has a problem of producing inaccurate results when the signal is complex. However, the use of peaking window measurements and cross-correlation measurements may be limited. Therefore, in this case, a simple trigger measurement method may be used.

### Estimation technique using peaking window measurement method

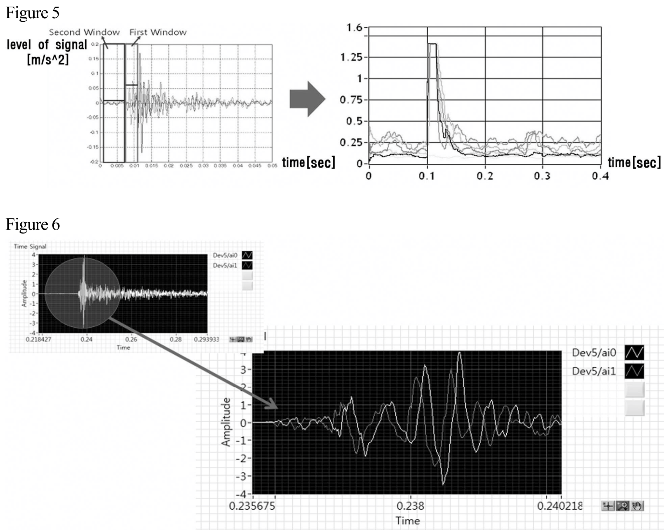

FIG. 5 is a view for explaining a picking window measurement method, which is a trigger analysis method of the noise tracking and processing apparatus according to an embodiment of the present invention.

As illustrated in FIG. 5, the peaking window measurement method uses a ratio of RMS values for different window signals of the second window and the first window.

RMS is one of the methods for calculating an average, and may be a useful method when trying to determine a size of a distribution of variables when the variables have both negative and positive values.

The first window and the second window may represent a signal level of an acceleration within a specific time period at a specific time.

For example, the first window of the left graph shown in FIG. 5 may represent a section from 0.001 seconds to 0.007 seconds at a specific time, and the second window may represent a section from 0.007 seconds to 0.011 seconds.

The sections of the first window and the second window may continue to change as time changes.

A dividing point between the first window and the second window may be a point at a specific time at which the peak value of the acceleration signal level differs by several times or more.

The peaking window measurement method involves calculating the time delay by comparing an amount of acceleration signal energy in different windows, such as the second window and the first window.

The signal energy of the acceleration may mean a value (RMS) expressed as the square root of the average of the squares of the signal levels of the accelerations within a specific window.

Specifically, the acceleration signal energy refers to a value expressed as the square root of the average of the squares of the peak values of positive and negative signal levels of accelerations within a specific window.

The ratio of the RMS value, which is the ratio of the energy of the acceleration signal in the second window and the first window, may be expressed as follows.

In the left graph of FIG. 5, the X-axis represents time, and the Y-axis represents the level of the acceleration signal.

### RMS _{Second Window}

In the right graph of FIG. 5, the X-axis represents time, and the Y-axis represents the ratio of RMS values, which is the energy ratio of the acceleration signal.

The unit of time may be seconds, and the unit of the level of the acceleration signal may be m/s2. Since the ratio of the RMS value is the energy value of the acceleration signal divided by the energy value of the acceleration signal, the unit may not exist.

As illustrated in the right graph of FIG. 5, when expressed as a ratio of RMS values, it is easier to specify the point in time when the ratio of RMS values changes rapidly.

Therefore, the peaking window measurement method may measure delay time more clearly than the simple trigger measurement method.

The peaking window measurement method may apply a simple trigger measurement method to the right drawing of FIG. 5 in order to specify the point in time when the ratio of RMS values changes rapidly.

When the ratio of the RMS values passes a positive threshold, the calculation program 31 may determine the ratio of the RMS values to be valid data.

Specifically, the calculation program 31 may determine a specific time and a specific signal level as valid data through the ratio of the triggered RMS values.

However, unlike the simple trigger measurement method that requires both positive and negative thresholds, in the case of the peaking window measurement method, the ratio of RMS values has only positive values. Therefore, the peaking window measurement method has the characteristic of requiring only a positive threshold.

FIG. 6 is a view for explaining a cross correlation measurement method, which is a trigger analysis method of the noise tracking and processing apparatus according to an embodiment of the present invention.

Measurement method using cross correlation measurement method

In the graph of FIG. 6, the X-axis represents time, and the Y-axis represents the level of the acceleration signal.

The unit of time may be seconds, and the unit of the level of the acceleration signal may be m/s2.

As illustrated in FIG. 6, the cross-correlation measurement method is a method of comparing the waveform of a time signal with a signal of a similar waveform in a medium to be compared.

Specifically, the calculation program 31 may convert the waveform of the acceleration signal of the medium to be compared into data and store it therein.

Among a plurality of channels, the user may find a channel that has an acceleration signal waveform similar to that of a medium to be compared in which the acceleration signal waveform is pre-built.

The user determines a point at which the channel having an acceleration signal waveform similar to that of the medium to be compared is located as a point adjacent to the noise source.

According to one embodiment of the present invention, the cross-correlation measurement method includes a feature in which the medium to be tracked, which is a vibrating medium, and the medium to be compared are the same as each other.

Therefore, when using the present invention for a vehicle body, the cross-correlation measurement method may be used when tracking a noise of the same composition of the vehicle body using the same medium.

As illustrated in FIG. 4, when the data acquisition unit 11 acquires data for each channel on the intensity of vibration occurring at different locations in the structure detected by the vibration sensing unit 10, the calculation program 31 calculates data indicating the location of the noise source using a triggering technique and a cumulative display technique.

The further away the channel is from the vibration generation point, the longer the delay time between the time the vibration occurs at the vibration generation point and the time the trigger is generated.

Channels with longer delay times may be located further away from the point of vibration occurrence.

According to one embodiment of the present invention, the calculation program 31 assigns an arrival order to each trigger when a trigger occurs.

The calculation program 31 cumulatively counts the number of trigger occurrences and first rank in arrival order for each channel.

**[Table 1]**

| Channel | Accumulated sum of triggering occurrence | Accumulated sum of first rank in arrival order | Accumulated sum of second rank in arrival order | Accumulated sum of third rank in arrival order | Accumulated sum of fourth rank in arrival order |
|---|---|---|---|---|---|
| **CH1** | 3 | | | 1 | 2 |
| **CH2** | 10 | 8 | 1 | 1 | |
| **CH3** | 20 | 14 | 3 | 2 | 1 |
| **CH4** | 10 | 6 | 2 | | 2 |

As illustrated in Table 1, the calculation program 31 may select a channel with a maximum accumulated first rank in arrival order based on the accumulated count data. When a specific channel is selected, the display unit 13 displays the vibration level signal of the channel with the highest cumulative total ranked first in the order of arrival.

For example, in the case of Table 1, channel 3 with the highest accumulated first rank in arrival order may be selected.

When the calculation program 31 selects channel 3, data about the intensity of vibration of channel 3 is displayed on the display unit 13.

In this case, the user may perceive that the noise occurs in the closest location to the point at which the vibration sensing unit of channel 3 is located.

According to the configuration of the present invention as described above, the user may see the vibration level signal of the channel with the maximum cumulative total of 1st order of arrival displayed on the display unit 13. Here, the point where the channel with the maximum accumulated first rank in arrival order is located may be recognized as the point adjacent to the noise source.

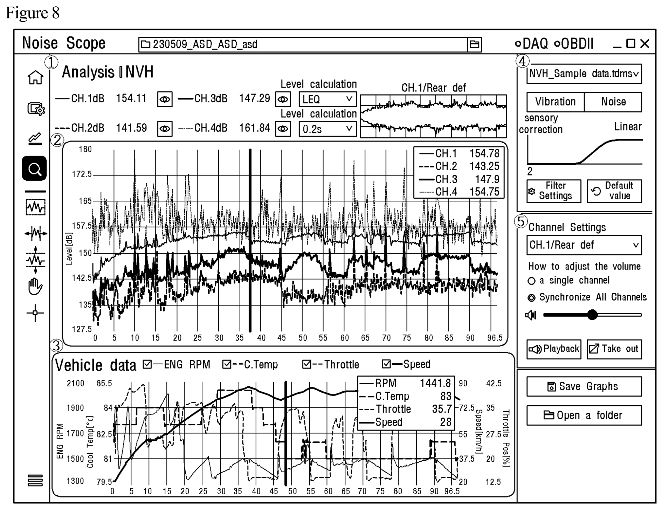

FIG. 8 is a view showing a screen configuration for post-processing analysis of a noise tracking according to an embodiment of the present invention. As illustrated in box 1 of FIG. 8, a screen configuration user interface for post-processing analysis of the noise tracking may be provided. Through a screen-configurable user interface for post-processing analysis of seam traces, the user may select an analysis method by selecting level calculation and level cycle, and check the level of each channel of the vibration sensing unit 10. Accordingly, the user may check the analysis section of the current noise tracking through the screen configuration for post-processing analysis of the noise tracking according to an embodiment of the present invention.

As illustrated in box 2 of FIG. 8, through the screen configuration user interface for post-processing analysis of noise tracking, users may check the measurement data graph view related to noise tracking in real time or the data of the selected analysis file, and may also check by enlarging or reducing the analysis section. Accordingly, the user may check the current analysis section for each section.

As illustrated in box 3 of FIG. 8, through the screen configuration user interface for post-processing analysis of the noise tracking, users may also check the vehicle's data in real time or from a selected analysis file. Users may check the car engine's RPM (revolutions per minute) and the car's speed through the vehicle data graph view.

As illustrated in box 4 of FIG. 8, through the screen configuration user interface for post-processing analysis of the noise tracking, users may select an analysis file and use the filter setting function to check or reset the currently applied filter.

As illustrated in box 5 of FIG. 8, through the screen configuration user interface for post-processing analysis of ear tracking, the user may play or export the signal and save the graph image.

Although the invention has been described in connection with preferred embodiments, the scope of the invention is not limited to these embodiments. The scope of the present invention is defined by the following claims and may include various modifications within the scope of equivalents to the present invention.

The drawing numbers below are intended to aid understanding of the invention and do not affect the interpretation of the scope of rights, and the scope of rights should not be narrowly interpreted based on the drawing symbols.

### Explanation of symbols

- 10:: Vibration sensing unit
- 11:: Data acquisition unit
- 12:: Case
- 13:: Display unit
- 14:: Cable
- 15:: Gripping part
- 30:: Data calculation unit
- 31:: Calculation program
- 100:: Noise tracking and processing device
- S10:: Vibration sensing step
- S20:: Data acquisition step
- S30:: Band-pass filter application step
- S40:: Triggering step
- S50:: Signal arrival order and maximum amplitude calculation step
- S60:: Display step
- S70:: Recognition step

## Claims

1. A method for tracking and processing a noise using a plurality of vibration sensing units, the method comprising:
a vibration sensing step for sensing a vibration of a structure;
a data acquisition step for acquiring data about an intensity of the vibration by receiving an input of the sensed vibration as a signal about the intensity of the vibration;
a triggering step for triggering an instance in which a signal level of the acquired data about the intensity of the vibration exceeds a certain threshold; and
an arrival order and maximum amplitude calculation step for calculating an arrival order by making the trigger time as an arrival time, and for calculating a maximum amplitude of the signal level of the data about the intensity of the vibration..

2. A method for tracking and processing a noise based on data indicating a position of a noise source generated by sensing a vibration of a structure, receiving the sensed vibration as a signal about an intensity of the vibration, acquiring data about the intensity of the vibration, the method comprising:
a triggering step for triggering an instance in which a signal level of the acquired data about the intensity of the vibration exceeds a certain threshold; and
an arrival order and maximum amplitude calculation step for calculating an arrival order by making the trigger time as an arrival time, and for calculating a maximum amplitude of the signal level of the data about the intensity of the vibration.

3. The method of claim 2, wherein the signal about the intensity of the vibration is output in a form of a vibration level signal, and the vibration level signal represents an acceleration of the vibration.

4. The method of claim 2 or 3, further comprising a recognition step for a user to recognize a point adjacent to a position at which the noise source occurs through the arrival order.

5. A method for tracking and processing a noise based on data indicating a position of a noise source generated by sensing a vibration of a structure, receiving the sensed vibration as a signal about an intensity of the vibration, acquiring data about the intensity of the vibration, the method comprising a triggering step for triggering an instance in which a signal level of the acquired data about the intensity of the vibration exceeds a certain threshold.

6. The method of claim 5, wherein the signal about the intensity of the vibration is output in a form of a vibration level signal, and the vibration level signal represents an acceleration of the vibration.

7. The method of claim 5 or 6, further comprising:
an arrival order and maximum amplitude calculation step for calculating an arrival order by making the trigger time as an arrival time, and for calculating a maximum amplitude of the signal level of the data about the intensity of the vibration; and
a recognition step for a user to recognize a point adjacent to the position of the noise source through the arrival order.

8. An apparatus for tracking and processing a noise using a plurality of vibration sensing units, the apparatus comprising:
a plurality of vibration sensing units configured to sense a vibration of a structure;
a data acquisition unit configured to receive a signal about an intensity of the vibration output from the plurality of vibration sensing units and acquire data about the intensity of the vibration;
a data calculation unit configured to receive data about the intensity of the vibration output from the data acquisition unit and calculate data indicating a location of a noise source; and
a display unit configured to display the data indicating the location of the noise source.

9. The apparatus of claims 8, wherein the signal about the intensity of the vibration is output in a form of a vibration level signal, and the vibration level signal represents an acceleration of the vibration.

10. The apparatus of claims 8 or 9, wherein the data calculation unit triggers a signal level that passes a positive threshold and a negative threshold among the vibration level signals, and determines that a specific triggered time and a specific signal level are valid data.

11. The apparatus of claims 8 or 9, wherein the data calculation unit sets a first window and a second window, which are specific time sections of the vibration level signal, to trigger a signal level passing a positive threshold through a ratio of RMS values of the first window and the second window, thereby determining the specific triggered time and the specific signal level as the valid data.

12. The apparatus of claims 8 or 9, wherein the data calculation unit converts a waveform of the signal level of a medium to be compared into data and stores the data therein, and determines a point at which one of the plurality of channels showing a waveform of a signal level similar to the waveform of the signal level of the medium to be compared is located as a point adjacent to the noise source.

13. An apparatus for tracking and processing a noise using a plurality of vibration sensing units, the apparatus comprising:
a data acquisition unit configured to receive a signal about an intensity of a vibration output from a plurality of vibration sensing units that sense a vibration of a structure and acquire data about the intensity of the vibration;
a data calculation unit configured to receive data about the intensity of the vibration output from the data acquisition unit and calculate data indicating a location of a noise source; and
a display unit configured to display data indicating the location of the noise source.

14. The apparatus of claims 13, wherein the signal about the intensity of the vibration is output in a form of a vibration level signal, and the vibration level signal represents an acceleration of the vibration.

15. The apparatus of claims 13 or 14, wherein the data calculation unit triggers a signal level that passes a positive threshold and a negative threshold among the vibration level signals to determine a specific triggered time and a specific signal level as valid data.

16. The apparatus of claims 13 or 14, wherein the data calculation unit sets a first window and a second window, which are specific time sections of the vibration level signal, to trigger a signal level passing a positive threshold through a ratio of RMS values of the first window and the second window, thereby determining the specific triggered time and the specific signal level as valid data.

17. An apparatus for tracking and processing a noise using a plurality of vibration sensing units, the apparatus comprising a data acquisition unit configured to receive a signal about an intensity of a vibration output from a plurality of vibration sensing units that sense a vibration of a structure and acquire data about the intensity of the vibration.

18. The apparatus of claims 17, wherein the signal about the intensity of the vibration is output in a form of a vibration level signal, and the vibration level signal represents an acceleration of the vibration.

19. The apparatus of claims 17 or 18, further comprising a data calculation unit configured to receive data about the intensity of the vibration output from the data acquisition unit and calculate data indicating a location of a noise source,
wherein the data calculation unit triggers a signal level that passes a positive threshold and a negative threshold among the vibration level signals to determine a specific triggered time and a specific signal level as valid data.

20. The apparatus of claims 17 or 18, further comprising a data calculation unit configured to receive data about the intensity of the vibration output from the data acquisition unit and calculate data indicating a location of a noise source,
wherein the data calculation unit sets a first window and a second window, which are specific time sections of the vibration level signal, to trigger a signal level passing a positive threshold through a ratio of RMS values of the first window and the second window, thereby determining the specific triggered time and the specific signal level as valid data.
